# EUROPEAN PATENT APPLICATION

(11) **EP 4 845 301 A2**
(43) Date of publication of application: **25.11.2026**
(21) Application number: 26209690.2
(22) Date of filing: 22.07.2021
(51) Int. Cl.: H04W 88/04

(54) **SIDELINK CONTROL INFORMATION BASED SENSING**

(30) Priority: 24.07.2020 US 202063056230 P
(62) Document number(s) of the earlier application(s) in accordance with Art. 76 EPC: 21748680.2 / 4 186 282
(71) Applicant: Lenovo (Singapore) Pte. Ltd, 556741 Singapore (SG)
(72) Inventor: GANESAN, Karthikeyan, 556741 Singapore (SG); BASU MALLICK, Prateek, 556741 Singapore (SG); KUCHIBHOTLA, Ravi, 556741 Singapore (SG)
(74) Representative: Openshaw & Co.

(57) **Abstract**

Apparatuses, methods, and systems are disclosed for sidelink control information based sensing. One method (700) includes receiving (702), at a first user equipment, a first discontinuous reception configuration. The first discontinuous reception configuration includes a first slot offset, a first on-duration, a first periodicity, or some combination thereof. The method (700) includes receiving (704) an indication to perform sensing in a sensing window. The sensing window includes an active time of the first discontinuous reception configuration. The method (700) includes performing (706) the sensing based on sidelink control information decoding and a reference signal received power measurement of a demodulation reference signal of a second user equipment.

## Description

### CROSS-REFERENCE TO RELATED APPLICATIONS

This application claims priority to United States Patent Application Serial Number 63/056,230 entitled "APPARATUSES, METHODS, AND SYSTEMS FOR SL RESOURCE ASSIGNMENT FOR POWER SAVING" and filed on July 24, 2020 for Karthikeyan Ganesan, which is incorporated herein by reference in its entirety.

### FIELD

The subject matter disclosed herein relates generally to wireless communications and more particularly relates to sidelink control information based sensing.

### BACKGROUND

In certain wireless communications networks, sidelink control information may be transmitted between sidelink devices. The sidelink control information may be monitored and/or measured.

### BRIEF SUMMARY

Methods for sidelink control information based sensing are disclosed. Apparatuses and systems also perform the functions of the methods. One embodiment of a method includes receiving, at a first user equipment, a first discontinuous reception configuration. The first discontinuous reception configuration includes a first slot offset, a first on-duration, a first periodicity, or some combination thereof. In some embodiments, the method includes receiving an indication to perform sensing in a sensing window. The sensing window includes an active time of the first discontinuous reception configuration. In certain embodiments, the method includes performing the sensing based on sidelink control information decoding and a reference signal received power measurement of a demodulation reference signal of a second user equipment.

One apparatus for sidelink control information based sensing includes a first user equipment. In some embodiments, the apparatus includes a receiver that: receives a first discontinuous reception configuration, wherein the first discontinuous reception configuration includes a first slot offset, a first on-duration, a first periodicity, or some combination thereof; and receives an indication to perform sensing in a sensing window. The sensing window includes an active time of the first discontinuous reception configuration. In various embodiments, the apparatus includes a processor that performs the sensing based on sidelink control information decoding and a reference signal received power measurement of a demodulation reference signal of a second user equipment.

Another embodiment of a method for discontinuous reception configuration includes receiving, at a first user equipment, a first discontinuous reception configuration. The first discontinuous reception configuration includes a first slot offset, a first on-duration, a first periodicity, or some combination thereof. In some embodiments, the method includes receiving a groupcast transmission. In certain embodiments, the method includes receiving an indication of a hybrid automatic repeat request feedback option. The hybrid automatic repeat request feedback option includes option 1 or option 2. In various embodiments, the method includes transmitting an acknowledgement for the groupcast transmission. In some embodiments, the method includes, in response to the hybrid automatic repeat request feedback option including option 1, entering discontinuous reception sleep in response to successfully decoding a transport block. In certain embodiments, the method includes, in response to the hybrid automatic repeat request feedback option including option 2, entering discontinuous reception sleep in response to transmitting the acknowledgement.

Another apparatus for discontinuous reception configuration includes a first user equipment. In some embodiments, the apparatus includes a receiver that: receives a first discontinuous reception configuration, wherein the first discontinuous reception configuration includes a first slot offset, a first on-duration, a first periodicity, or some combination thereof; receives a groupcast transmission; and receives an indication of a hybrid automatic repeat request feedback option. The hybrid automatic repeat request feedback option includes option 1 or option 2. In various embodiments, the apparatus includes a transmitter that transmits an acknowledgement for the groupcast transmission. In certain embodiments, the apparatus includes a processor that: in response to the hybrid automatic repeat request feedback option including option 1, enters discontinuous reception sleep in response to successfully decoding a transport block; and, in response to the hybrid automatic repeat request feedback option including option 2, enters discontinuous reception sleep in response to transmitting the acknowledgement.

A further embodiment of a method for entering discontinuous reception sleep includes transmitting a groupcast transmission. In some embodiments, the method includes entering discontinuous reception sleep in response to receiving an acknowledgement from all receiver user equipments, not receiving a negative acknowledgement from all receiver user equipments, or a combination thereof.

A further apparatus for entering discontinuous reception sleep includes a transmitter that transmits a groupcast transmission. In some embodiments, the apparatus includes a processor that enters discontinuous reception sleep in response to receiving an acknowledgement from all receiver user equipments, not receiving a negative acknowledgement from all receiver user equipments, or a combination thereof.

One embodiment of a method for channel state information reporting includes transmitting a channel state information trigger. The channel state information trigger includes an indication indicating transmission of a channel state information report. The indication indicates whether the channel state information report is to be transmitted during a current on-duration, a following on-duration, or a combination thereof, and the indication is set based on receiving a channel state information port latency from a higher layer. In some embodiments, the method includes receiving the channel state information report based on the indication.

One apparatus for channel state information reporting includes a transmitter that transmits a channel state information trigger. The channel state information trigger includes an indication indicating transmission of a channel state information report. The indication indicates whether the channel state information report is to be transmitted during a current on-duration, a following on-duration, or a combination thereof, and the indication is set based on receiving a channel state information port latency from a higher layer. In some embodiments, the apparatus includes a receiver that receives the channel state information report based on the indication.

Another embodiment of a method for channel state information reporting includes monitoring whether a channel state information trigger is received. The channel state information trigger includes an indication indicating transmission of a channel state information report. The indication indicates whether the channel state information report is to be transmitted during a current on-duration, a following on-duration, or a combination thereof, and the indication is set based on receiving a channel state information report latency from a higher layer. In some embodiments, the method includes transmitting a channel state information report based on the indication.

Another apparatus for channel state information reporting includes a processor that monitors whether a channel state information trigger is received. The channel state information trigger includes an indication indicating transmission of a channel state information report. The indication indicates whether the channel state information report is to be transmitted during a current on-duration, a following on-duration, or a combination thereof, and the indication is set based on receiving a channel state information report latency from a higher layer. In some embodiments, the apparatus includes a transmitter that transmits a channel state information report based on the indication.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for sidelink control information based sensing;
Figure 2 is a schematic block diagram illustrating one embodiment of an apparatus that may be used for sidelink control information based sensing;
Figure 3 is a schematic block diagram illustrating one embodiment of an apparatus that may be used for sidelink control information based sensing;
Figure 4 is a schematic block diagram illustrating one embodiment of communications in a candidate resource selection procedure;
Figure 5 is a schematic block diagram illustrating one embodiment of communications in a sensing operation;
Figure 6 is a schematic block diagram illustrating one embodiment of relay UE remote UE SL BWP coordination;
Figure 7 is a flow chart diagram illustrating one embodiment of a method for sidelink control information based sensing;
Figure 8 is a flow chart diagram illustrating one embodiment of a method for discontinuous reception configuration;
Figure 9 is a flow chart diagram illustrating one embodiment of a method for entering discontinuous reception sleep;
Figure 10 is a flow chart diagram illustrating one embodiment of a method for channel state information reporting; and
Figure 11 is a flow chart diagram illustrating another embodiment of a method for channel state information reporting.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

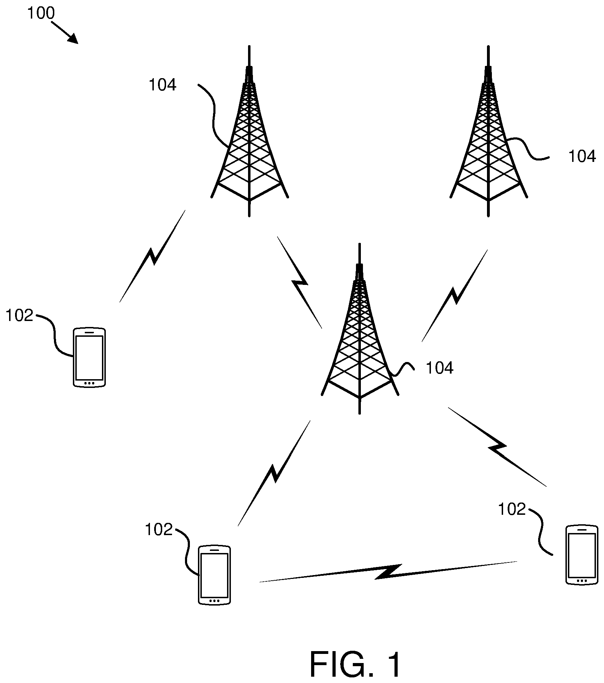

Figure 1 depicts an embodiment of a wireless communication system 100 for sidelink control information based sensing. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 may receive, at a first user equipment, a first discontinuous reception configuration. The first discontinuous reception configuration includes a first slot offset, a first on-duration, a first periodicity, or some combination thereof. In some embodiments, the remote unit 102 may receive an indication to perform sensing in a sensing window. The sensing window includes an active time of the first discontinuous reception configuration. In certain embodiments, the remote unit 102 may perform the sensing based on sidelink control information decoding and a reference signal received power measurement of a demodulation reference signal of a second user equipment. Accordingly, the remote unit 102 may be used for sidelink control information based sensing.

In certain embodiments, a remote unit 102 may receive, at a first user equipment, a first discontinuous reception configuration. The first discontinuous reception configuration includes a first slot offset, a first on-duration, a first periodicity, or some combination thereof. In some embodiments, the remote unit 102 may receive a groupcast transmission. In certain embodiments, the remote unit 102 may receive an indication of a hybrid automatic repeat request feedback option. The hybrid automatic repeat request feedback option includes option 1 or option 2. In various embodiments, the remote unit 102 may transmit an acknowledgement for the groupcast transmission. In some embodiments, the remote unit 102 may, in response to the hybrid automatic repeat request feedback option including option 1, enter discontinuous reception sleep in response to successfully decoding a transport block. In certain embodiments, the remote unit 102 may, in response to the hybrid automatic repeat request feedback option including option 2, enter discontinuous reception sleep in response to transmitting the acknowledgement. Accordingly, the remote unit 102 may be used for discontinuous reception configuration.

In some embodiments, a remote unit 102 may transmit a groupcast transmission. In some embodiments, the remote unit 102 may enter discontinuous reception sleep in response to receiving an acknowledgement from all receiver user equipments, not receiving a negative acknowledgement from all receiver user equipments, or a combination thereof. Accordingly, the remote unit 102 may be used for entering discontinuous reception sleep.

In various embodiments, a remote unit 102 may transmit a channel state information trigger. The channel state information trigger includes an indication indicating transmission of a channel state information report. The indication indicates whether the channel state information report is to be transmitted during a current on-duration, a following on-duration, or a combination thereof, and the indication is set based on receiving a channel state information port latency from a higher layer. In some embodiments, the remote unit 102 may receive the channel state information report based on the indication. Accordingly, the remote unit 102 may be used for channel state information reporting.

In certain embodiments, a remote unit 102 may monitor whether a channel state information trigger is received. The channel state information trigger includes an indication indicating transmission of a channel state information report. The indication indicates whether the channel state information report is to be transmitted during a current on-duration, a following on-duration, or a combination thereof, and the indication is set based on receiving a channel state information report latency from a higher layer. In some embodiments, the remote unit 102 may transmit a channel state information report based on the indication. Accordingly, the remote unit 102 may be used for channel state information reporting.

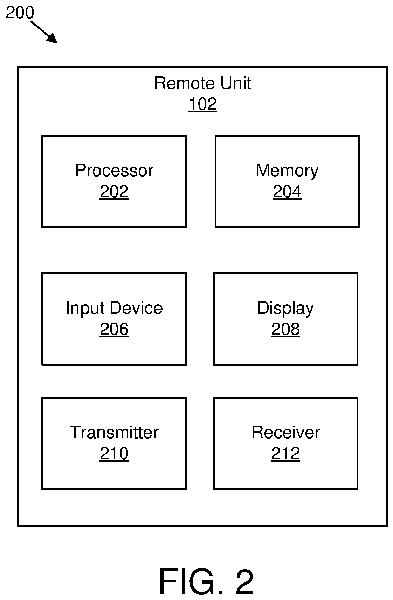

Figure 2 depicts one embodiment of an apparatus 200 that may be used for sidelink control information based sensing. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In certain embodiments, the receiver 212: receives a first discontinuous reception configuration, wherein the first discontinuous reception configuration includes a first slot offset, a first on-duration, a first periodicity, or some combination thereof; and receives an indication to perform sensing in a sensing window. The sensing window includes an active time of the first discontinuous reception configuration. In various embodiments, the processor 202 performs the sensing based on sidelink control information decoding and a reference signal received power measurement of a demodulation reference signal of a second user equipment.

In some embodiments, the receiver 212: receives a first discontinuous reception configuration, wherein the first discontinuous reception configuration includes a first slot offset, a first on-duration, a first periodicity, or some combination thereof; receives a groupcast transmission; and receives an indication of a hybrid automatic repeat request feedback option. The hybrid automatic repeat request feedback option includes option 1 or option 2. In various embodiments, the transmitter 210 transmits an acknowledgement for the groupcast transmission. In certain embodiments, the processor 202: in response to the hybrid automatic repeat request feedback option including option 1, enters discontinuous reception sleep in response to successfully decoding a transport block; and, in response to the hybrid automatic repeat request feedback option including option 2, enters discontinuous reception sleep in response to transmitting the acknowledgement.

In various embodiments, the transmitter 210 transmits a groupcast transmission. In some embodiments, the processor 202 enters discontinuous reception sleep in response to receiving an acknowledgement from all receiver user equipments, not receiving a negative acknowledgement from all receiver user equipments, or a combination thereof.

In certain embodiments, the transmitter 210 transmits a channel state information trigger. The channel state information trigger includes an indication indicating transmission of a channel state information report. The indication indicates whether the channel state information report is to be transmitted during a current on-duration, a following on-duration, or a combination thereof, and the indication is set based on receiving a channel state information port latency from a higher layer. In some embodiments, the receiver 212 receives the channel state information report based on the indication.

In some embodiments, the processor 202 monitors whether a channel state information trigger is received. The channel state information trigger includes an indication indicating transmission of a channel state information report. The indication indicates whether the channel state information report is to be transmitted during a current on-duration, a following on-duration, or a combination thereof, and the indication is set based on receiving a channel state information report latency from a higher layer. In some embodiments, the transmitter 210 transmits a channel state information report based on the indication.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

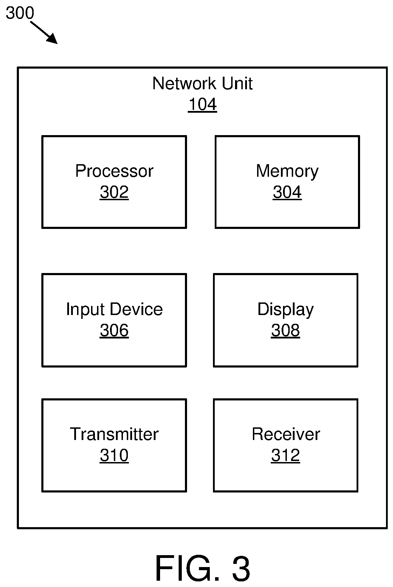

Figure 3 depicts one embodiment of an apparatus 300 that may be used for sidelink control information based sensing. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In certain embodiments, sidelink discontinuous reception ("DRX") for periodic data may be used for a virtual time domain resource pool concept for commercial device to device ("D2D") and/or pedestrian user equipment ("UE") communications. In such embodiments, the impact on sidelink DRX in sidelink resource allocation operations may be determined (e.g., in a sensing procedure, candidate resource exclusion, and/or a selection procedure). Moreover, in such embodiments, managing a load of sidelink resource in a resource pool per DRX cycle and a reconfiguration of sidelink DRX parameters may be done with a congestion control mechanism.

In some embodiments, power saving enables UEs with battery constraints to perform sidelink operations in a power efficient manner. In various embodiments, new radio ("NR") sidelink may be designed based on an assumption of "always-on" if a UE operates sidelink (e.g., only focusing on UEs installed in vehicles with sufficient battery capacity). In certain embodiments, power saving may be used for vulnerable road users ("VRUs") in vehicle to everything ("V2X") configurations and for UEs in public safety and commercial use configurations in which power consumption in the UEs needs to be minimized.

In various embodiments, enhanced reliability and reduced latency may support ultra-reliable low-latency communication ("URLLC") type sidelink. The system level reliability and latency performance of sidelink may be affected by communication conditions such as a wireless channel status and an offered load. NR sidelink may be expected to have limitations in achieving high reliability and low latency in some conditions (e.g., if a channel is relatively busy).

As used herein, the term eNB and/or gNB may be used for a base station, but may be replaced by other radio access nodes (e.g., base station ("BS"), eNB, gNB, access point ("AP"), NR, and so forth). Moreover, while embodiments herein may be described in the context of 5G NR, they may be equally applicable to other mobile communication systems supporting serving cells and/or carriers configured for sidelink communication over a PC5 interface.

In certain embodiments, a DRX cycle configuration includes a starting offset, an on-duration, a periodicity, an inactivity timer, a hybrid automatic repeat request ("HARQ") retransmission timer, and so forth.

In some embodiments, a DRX on-duration and an active period implies a same duration of an active reception period in-terms of slot duration.

In various embodiments, a pedestrian ("P") UE ("P-UE") may be configured with a partial sensing configuration in which sensing (e.g., decoding sidelink control information ("SCI") and measuring sidelink reference signal received power ("RSRP") may be performed within a specified minimum candidate subframe and duration provided as part of a higher layer partial sensing configuration.

In certain embodiments, each sidelink ("SL") LCH, SL service, SL application, and/or SL destination may be associated with a preconfigured and/or fixed SL-DRX-configuration that is defined as a combination of offset_std_On-duration, On-duration-timer, and periodicity. In such embodiments, the resource usage in a resource pool depends on a SL DRX configuration. If the same DRX parameters (e.g., offset, on-duration) are configured for many UEs, then there may be collision due to congestion - resulting in packet loss.

In a first embodiment, there may be an impact of SL DRX on a mode 2 resource allocation procedure. In such an embodiment, one or more DRX cycles may be configured as part of a partial sensing operation in which one or more DRX cycle configurations (e.g., slot offset, on-duration, periodicity) are identical for partial sensing and actual data reception from an application

In the first embodiment, for a certain DRX configuration for sensing, the sensing results from multiple past activity periods may be used to perform resource selection if the data arrives at an L2 buffer.

Moreover, in the first embodiment, a DRX cycle configuration for partial sensing operation is a superset of a DRX cycle configured for each application operational at a UE.

Further, in the first embodiment, sensing measurements (e.g., averaged sidelink RSRP) are maintained per each DRX cycle configuration.

In addition, in the first embodiment, candidate resource exclusion and reporting of candidate resource sets to higher layers may be based on and be per each DRX cycle configuration.

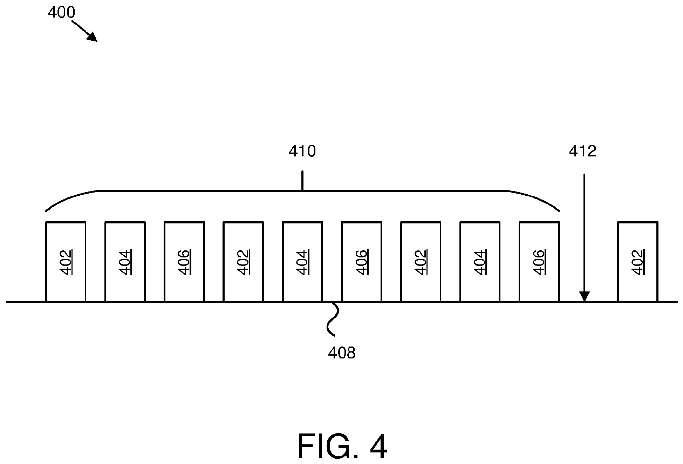

In the first embodiment, one or more sidelink DRX cycles may be configured at a UE as part of a partial sensing configuration provided by higher layer wherein the UE performs partial sensing (e.g., decoding SCI and estimating sidelink RSRP according to one or more sidelink DRX cycle configurations - such as within the DRX on-duration and/or active period. In such an embodiment, the sensing window (e.g., defined by range of slots, msec, or sec) may be started at an onset of each configured DRX on-duration and/or active period until an end of the DRX on-duration and/or active period. For a candidate resource selection within a certain DRX cycle on-duration and/or active period of RX UEs and/or destination IDs, sensing results from across multiple past activity periods belonging to the same associated DRX cycle on-duration and/or active period may be used for estimated averaged RSRP, candidate resource exclusion, candidate resource selection, and so forth if the data arrives at the L2 buffer and/or resource reselection triggered as shown in Figure 4. In one implementation of the first embodiment, a DRX cycle configuration (e.g., DRX on-duration, slot offset, periodicity) may be identical for partial sensing and actual data reception from an application. In another implementation of the first embodiment, a UE may be configured with one DRX cycle configuration for partial sensing that is the superset of a DRX cycle configured for each application operational at a UE, which means the DRX cycle configuration and/or gapCandidateSensing for partial sensing includes multiple DRX cycles configured each for an application operational at a UE and sensing results from across multiple past activity periods belonging to the same associated DRX cycle on-duration and/or active period for RX UEs and/or destination IDs used for estimated averaged RSRP, candidate resource exclusion, candidate resource selection, and so forth.

In various embodiments, if a UE is configured with partial sensing with one or more sidelink DRX cycle configuration, in one implementation of the first embodiment, is the sidelink DRX parameters contains the on-duration, starting offset, periodicity, and so forth, then the UE performs a sensing operation of decoding 1st SCI and estimating L1 RSRP ("L1-RSRP") according to one or more sidelink DRX cycle on-durations and/or active periods.

In another implementation of the first embodiment, a UE performs a sensing operation according to a configured sidelink DRX parameter of slot offset, on-duration, active period, and/or periodicity, the UE may start an inactivity timer and/or a HARQ retransmission timer to extend a receiver active period in the sensing operation if a UE decodes a destination ID from physical sidelink control channel ("PSCCH") and physical sidelink shared channel ("PSSCH") and finds that the destination ID is part of the configured destination ID to receive data from neighboring UEs. As an example, duration for the inactivity timer and HARQ retransmission timer may be according to an L1-priority and/or whether SL HARQ enabled and/or disabled is specified in the decoded SCI.

In a further implementation of the first embodiment, minNumCandidateSF represents a candidate resource selection within a DRX cycle on-duration and/or active period of receiver UEs and/or destination IDs and a number of candidate subframes depends on the DRX cycle on-duration and/or active period. In one example, a higher layer parameter may include minNumCandidateSF provided to the physical layer ("PHY") as part of a sensing configuration for reporting candidate resource set.

In another implementation of the first embodiment, multiple sensing windows may be implemented if each corresponds to a DRX cycle on-duration and/or active period.

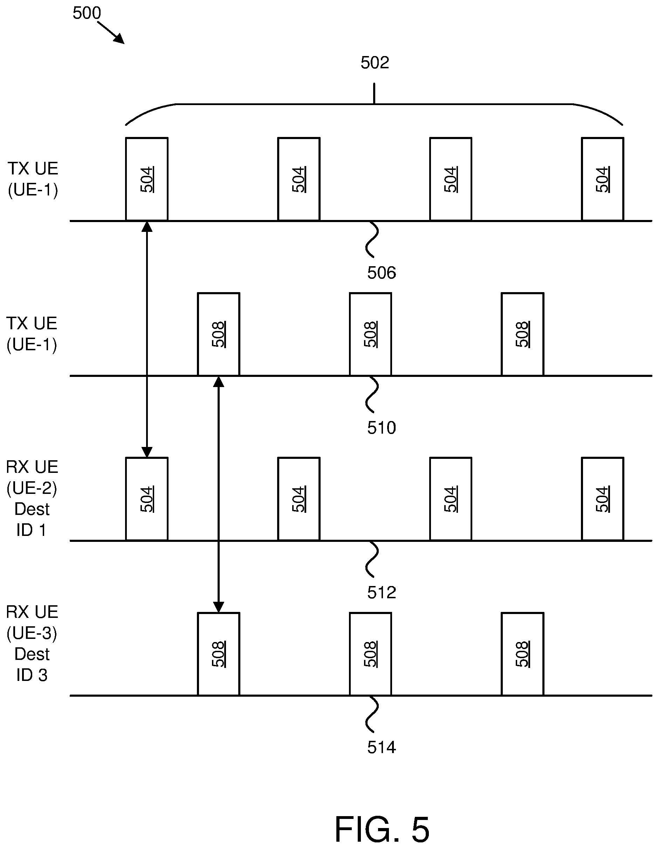

In certain embodiment, one way to set a DRX cycle on-duration and/or active period for a destination may be based on a priority of an application. If a TX UE has data to transmit to one or more destination IDs and/or destination group IDs, a UE performs candidate resource selection based on a sensing operation performed within its configured DRX cycle on-duration and/or active period as shown in the Figure 4 and/or Figure 5.

In some embodiments, a UE may estimate sensing measurements (e.g., averaged sidelink RSRP measured from PSCCH and/or PSSCH demodulation reference signal ("DMRS")), and/or perform resource exclusion from a candidate resource based on L1-priority decoded from SCI, configured L1-RSRP threshold per L1-priority in SCI, and a resource reservation period per each DRX cycle configuration. In such embodiments, a configuration of a DRX cycle corresponds to an application and/or data.

In various embodiments, if a UE receives a resource selection and/or reselection trigger from higher layers then the UE may perform candidate resource exclusion and/or candidate resource selection based on measurement results from a sensing window and a duration of the sensing window may depend on a DRX cycle on-duration and/or active period. The UE reports the candidate resource set (e.g., such as set A, set B) to higher layers per each DRX cycle configuration. In such embodiments, if a UE is configured with two application (e.g., App1, App2) each with a distinct DRX cycle configuration (e.g., DRX_1, DRX_2), then the UE physical layer ("PHY") reports two different candidate resource sets to a higher layer, the candidate resource sets corresponding to DRX_1 and DRX_2 respectively.

Figure 4 is a schematic block diagram illustrating one embodiment of communications 400 in a candidate resource selection procedure according to a corresponding partial sensing DRX configuration. The communications 400 include a first DRX cycle configuration 402, a second DRX cycle configuration 404, and a third DRX cycle configuration 406 repeatedly transmitted over a time 408 with some communications within a partial sensing window 410. At a time 412, there is a resource selection trigger and/or resource reselection trigger. The first DRX cycle configuration 402 is repeated based on a DRX on-duration. After the time 412, the first DRX cycle configuration 402 is used for resource selection for a destination using estimated averaged SL RSRP, candidate resource exclusion, and candidate resource selection based on the DRX on-duration during the partial sensing window 410.

Figure 5 is a schematic block diagram illustrating one embodiment of communications 500 in a sensing operation where UEs are configured with two destinations in two different DRX cycles. Specifically, the communications 500 include sensing slots 502 which include a first DRX cycle configuration 504 and a second DRX cycle configuration 508 transmitted over times 506, 510, 512, and 514. The communications 500 are transmitted from the TX UE (UE-1) and received by RX UE (UE-2) destination ID 1 and RX UE (UE-3) destination ID 2.

In certain embodiments, if one or more DRX cycles overlap in a partial sensing operation (e.g., which means the on-duration of one DRX cycle partially overlaps the on-duration of another DRX cycle), then SCI decoding and averaged sidelink RSRP measured in the partially overlapping duration is taken into account considering each DRX cycle configuration. For example, if a UE is configured with two applications (e.g., App1, App2) with partially overlapping DRX cycle configuration (e.g., DRX_1, DRX_2), then a UE PHY reports two different candidate resource sets to a higher layer (e.g., each corresponding to DRX_1 and DRX_2) that also includes resources from the partially overlapping duration. The UE may select or reserve resources for both App1, App2 in the partially overlapping duration.

In some embodiments, a resource selection trigger and/or a resource reselection trigger may inform a UE about whether to enter sleep or to enter an active period and/or on-duration between slots in which the UE receives the trigger from a higher layer and T2 (e.g., T2min) or a slot if the actual data transmission is scheduled. Depending on that, the UE may monitor SCI from other UE and enter DRX sleep.

In a second embodiment, there may be channel busy ratio ("CBR") reporting per DRX cycle configuration and/or congestion control per resource pool per DRX cycle configuration.

In the second embodiment, the CBR and/or a channel occupancy ratio ("CR") time window size may include one or more DRX cycle configurations. Further, in the second embodiment, a UE reports the CBR and/or the CR measurement per each DRX cycle configuration from its configured DRX cycle configuration. Moreover, in the second embodiment, a congestion control mechanism of restricting PSSCH and/or PSCCH TX parameters may be performed per resource pool per each DRX cycle configuration. In the second embodiment, there may be a reconfiguration of a sidelink DRX configuration (e.g., offset, on-duration) for a TX UE, group of UEs, or destination IDs based on the congestion control mechanism by receiving the CBR and/or the CR measurement per each DRX cycle configuration.

In the second embodiment, a network may configure multiple sidelink DRX cycle configurations for a UE to perform CBR and/or CR. The UE is configured to measure CBR and/or CR from multiple DRX cycle configurations. The selection of multiple DRX cycle configurations includes other DRX cycle configurations for which the UE is not associated with an application. The UE may report the CBR and/or the CR per each DRX cycle configuration to a gNB, a road side unit ("RSU"), and/or an SUE.

In some embodiments, a gNB may configure and/or preconfigure one or more sidelink UEs to report CBR (e.g., sidelink received signal strength indicator ("RSSI") per each DRX cycle configuration). In such embodiments, the CBR and/or the CR time window size may include one or more DRX cycles. In various embodiments, sidelink UEs may report CBR and/or CR measurement per each DRX cycle configuration from its configured DRX cycle configuration. In certain embodiments, sidelink UEs may report a CBR and/or a CR measurement only from a configured and/or preconfigured DRX cycle configuration. In such embodiments, the UE performs sidelink RSSI averaging only from subchannels and time slots within each DRX cycle on-duration and/or active period associated with each DRX cycle configuration.

In various embodiments, a sidelink resource (e.g., time and/or frequency) of a DRX cycle configuration remains busy only if a sidelink RSSI measured within its DRX cycle on-duration and/or active period exceeds a configured and/or preconfigured threshold.

In certain embodiments, a congestion control mechanism of restricting PSSCH and/or PSCCH TX parameters may be applied per resource pool per each DRX cycle configuration. In one example, the congestion control mechanism of restricting TX parameters may be applied differently to the same resource pool based on a CBR and/or a CR measurement results performed in each of the DRX cycle configurations.

In some embodiments, congestion control may limit the following parameters: 1) an upper bound on CR (e.g., a CRlimit per DRX cycle and/or active period); 2) a range of a modulation and coding scheme ("MCS") for a given MCS table; 3) a range of a number of subchannels; 4) an upper bound on transmissions and/or retransmission; and/or 5) an upper bound on TX power.

In various embodiments, a gNB may reconfigure a sidelink DRX cycle configuration (e.g., offset, on-duration) for a TX UE, a group of UEs, or destination IDs based on the CBR and/or the CR measurement. In certain embodiments, reconfiguration may be transmitted using L3 signaling (e.g., RRC signaling) or L2 signaling (e.g., MAC CE). In some embodiments, reconfiguration contains a new DRX cycle configuration (e.g., offset, on-duration, periodicity) along with corresponding destination IDs to which it is applied. In various embodiments, a TX UE may transmit a reconfiguration message (e.g., containing a new DRX cycle configuration) using L2 or L3 signaling to its RX UEs in one of the current DRX cycle on-durations and/or active periods.

In a third embodiment, there may be a sidelink DRX cycle for the reception of a synchronization signal block ("SSB"). In the third embodiment, a UE may be configured and/or preconfigured with one or more candidate DRX cycle configurations for sidelink SSB reception from one or more synchronization reference UEs. In such an embodiment, one or more parameters required for extending an active period (e.g., inactivity timer, HARQ retransmission timer) may not be configured.

In a fourth embodiment, for groupcast transmission option 2, each RX UE may enter early DRX sleep as soon as it transmits an acknowledgment ("ACK") while the receiver of the transmitter UE that performed the groupcast transmission may enter DRX sleep only receiving ACKs from all RX UEs or a HARQ buffer is flushed and/or cleared. Moreover, in the fourth embodiment, for groupcast option 1, each RX UE may enter DRX sleep after successful decoding a transport block ("TB") while the transmitter UE that performed the groupcast transmission enters DRX sleep only if it did not receive a negative acknowledgment ("NACK") from any RX UEs.

In certain embodiments, for a groupcast transmission in a UE where a TB is repeatedly transmitted with feedback option 2 containing dedicated ACK and/or NACK resources, RX UEs may enter early DRX sleep after transmitting ACK if there is no more data to be received or transmitted in a current on-duration and/or active period. A receiver of a TX UE (e.g., that performed the groupcast TB transmission) may enter early DRX sleep only if a HARQ buffer can be cleared and/or flushed for this TB (e.g., if ACKs from all Rx UEs have been received and there is no more data to be received or transmitted in a current on-duration and/or active period).

In some embodiments, for feedback option 1 containing a common NACK resource, RX UEs may enter early DRX sleep upon successful decoding of a TB while the receiver of a TX UE (e.g., that performed a groupcast TB transmission) may enter early DRX sleep only if no NACK is received for the transmission of this TB and then there is no more data to be received or transmitted in a current on-duration and/or active period.

In various embodiments, only a subset of UEs including a TX UE and RX UEs that received NACK or transmitted NACK may start an inactivity timer or HARQ retransmission timer, where other RX UEs may enter early DRX sleep as soon as it transmits ACK or decoded TB successfully.

In a fifth embodiment, there may be an impact of DRX on a channel state information ("CSI") reporting procedure. In the fifth embodiment, peer UEs may implicitly extend an active period by starting an inactivity timer based on a CSI trigger and/or a CSI report latency (e.g., a duration of the inactivity timer covers the CSI report latency). Moreover, in the fifth embodiment, peer UEs may explicitly indicate whether to report a CSI report in a current DRX cycle active period or in a next occurrence of the DRX cycle active period.

In certain embodiments, a transmitter and a receiver UE may either extend their current active period (e.g., start an inactivity timer) based on a CSI trigger and a CSI report latency or with an indication about whether reporting will be accomplished in a current DRX cycle active period or in a next DRX cycle on-duration provided a latency of the CSI reporting permits it. In such embodiments, an RX UE, after receiving a trigger for CSI reporting towards an end of a current on-duration and/or active period may extend the active period by starting the inactivity timer until the transmission of a CSI report based on the configured CSI report latency. In another embodiment, a separate timer other than the inactivity timer may be configured and this new timer may be started based on a trigger for CSI reporting in SCI corresponding to an RRC configured latency of the CSI reporting for this UE to UE ("PC5") radio resource control ("RRC") connection. In a further embodiment, DRX cycle configurations may be exchanged between peer UEs as part of a PC5 RRC connection.

In some embodiments, an indication signaled semi-statically using PC5 RRC specifies peer UEs behavior upon reception of a CSI report trigger and a corresponding CSI report latency indicating whether the CSI report is to be transmitted in a current DRX cycle active period or in a next DRX cycle active period.

In various embodiments, an indication may be dynamically signaled in SCI and/or a MAC CE specifying a UEs behavior upon reception of a CSI report trigger indicating whether the CSI report is to be transmitted in a current DRX cycle active period or in a next DRX cycle active period.

In certain embodiments, a UE may enter early DRX sleep after transmission of a CSI report if there is no more data to receive or transmit in a current on-duration and/or active period to the same destination, while the UE that triggered the CSI report enters DRX sleep only after the reception of the CSI report if it does not have any more data for transmission and/or reception.

In a sixth embodiment, there may be channel state information ("CSI") reporting per subchannel. Moreover, in the sixth embodiment, a TX UE may transmit a CSI reference signal ("RS") ("CSI-RS") in one or more subchannels associated with corresponding subchannels of a data transmission where the CSI reporting may be configured to report per subchannel. In one implementation of the sixth embodiment, MAC CE contains fields for CSI reporting for each subchannel. In one example, CSI contains a channel quality indicator ("CQI"), a rank indicator ("RI"), and so forth. In another implementation of the sixth embodiment, a field in a MAC CE is formed from a lowest sub-channel to a highest sub-channel associated with a CSI-RS where a lowest subchannel contains an absolute CQI and the rest of the subchannels contain differential CQI. In a further implementation of the sixth embodiment, a TX UE may explicitly inform an RX UE in a PC5 RRC or in SCI about whether to report wideband CQI or subchannel CQI.

In a seventh embodiment, there may be a DRX cycle adaptation. In the seventh embodiment, a gNB may transmit a MAC CE for sidelink short and long DRX cycle adaptation, and a UE after receiving MAC CE from the gNB may adapt a sidelink active time and a 'DRX adaptation config' may be sent to a group member in SL MAC CE, higher layer signaling, or in SCI. For unicast, a PC5 RRC connection may be used for a configuring short and long DRX cycle and, in one example, either MAC CE, PC5 RRC, or SCI may be used for transmitting 'DRX adaptation config'.

In an eighth embodiment, there may be transmission of a SL wake-up signal ("WUS"). In the eighth embodiment, a gNB, based on a sidelink buffer status report and uplink buffer status report, may signal in a wakeup indication whether it schedules uplink, sidelink, or both in a next occurrence of a DRX cycle on-duration and/or active period for Uu and SL, respectively. In such an embodiment, a UE receiver (e.g., Uu and/or SL) is active for reception. Moreover, another field may be added in a DCI format 2_6 to indicate a separate wake up indicator for a Uu receiver and/or a SL receiver. The location of a wakeup indication bit for Uu and/or SL in a corresponding information block in DCI format 2_6 may be separately signaled by RRC.

In the eight embodiment, a minimum time slot offset may specify a difference from an end of a slot from a WUS reception from a gNB and a starting slot in which a SL WUS ("SL-WUS") may be transmitted to sidelink receiver UEs in a candidate monitoring occasion that is between a SL DRX on-duration and a SL wakeup offset (e.g., pre-wake up period). This may be separately signaled by RRC, per resource pool, or dynamically indicated in a DCI format 2_6. The TX UE, after receiving the WUS from the gNB determining there is a mode 1 grant to be scheduled in a next occurrence of a DRX cycle on-duration and/or active period for sidelink, may start preparing for a transmission of a SL WUS to one or more receiver UE. Selection of destination IDs or RX UEs for the transmission of a sidelink WUS in a pre-wake up period may be based on a highest priority of logical channels ("LCHs") and their associated destination IDs.

In some embodiments, a gNB, after receiving a scheduling resource ("SR") and/or corresponding buffer status report ("BSR") from a UE before a wake-up offset or a DRX-on-duration based on a buffer size by comparing it with a pre-defined threshold on a buffer size, may decide whether to wake up a UE receiver in an upcoming DRX cycle on-duration or in a following DRX on-duration.

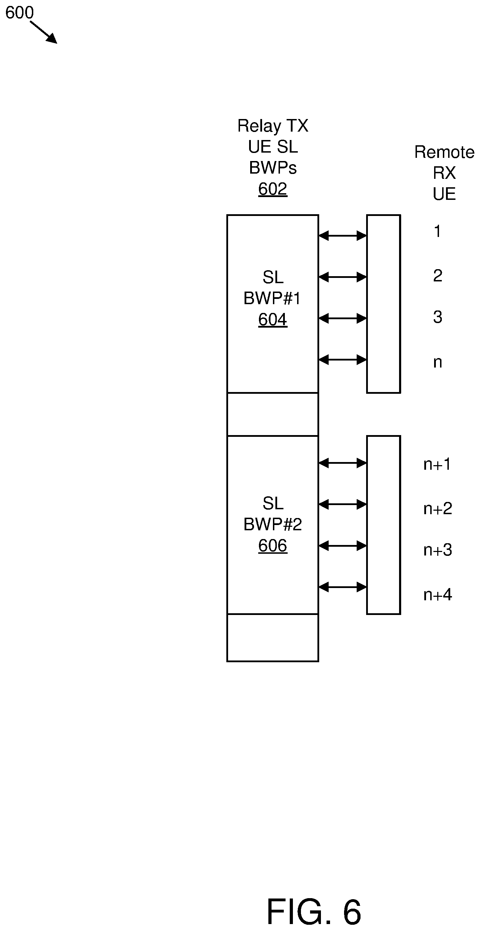

In a nineth embodiment, a emote UE transmitter ("TX") and/or RX SL bandwidth part ("BWP") may be flexibly assigned within one or more of the relay TX UE SL BWPs as shown in Figure 6. The SL BWP in both of a remote UE and a relay UE may be in sync (e.g., they may change and/or switch using a handshake). A remote UE SL BWP may be a small fraction of a relay UE's BWP and may be configured and/or reconfigured according to a relay UE's SL BWP. This may be achieved using PC5 RRC, MAC control element ("CE"), or lower layer SCI (e.g., 1st SCI or 2nd SCI) signaling.

In certain embodiments, if a SL BWP is within an UL BWP of a relay UE, the UL BWP and SL BWP may contain the same numerology to avoid a switching time between them by the relay UE. If an active UL BWP is switched to a different configured UL BWP containing a different numerology at a relay UE side, a SL BWP of the relay UE may be switched according to a corresponding numerology to avoid having a BWP switching time. This may be achieved with a SL grant from downlink control information ("DCI") or a UE may autonomously switch to a corresponding SL BWP matching the numerology of the UL BWP. In some embodiments, a gNB may be informed about SL BWP switching in UL control signaling so that the gNB may process mode 1.

Figure 6 is a schematic block diagram 600 illustrating one embodiment of relay UE remote UE SL BWP coordination. The schematic block diagram 600 includes relay TX UE SL BWPs 602 including a SL BWP#1 604 and a SL BWP#2 606 and communication coordination with remote RX UEs.

In some embodiments, if a relay UE configures one or more SL BWP for remote UEs and only UEs among them are activated, the relay UE, based on a resource utilization and/or CBR measurement received from the Remote UEs, may switch one or more remote UEs to different SL BWPs.

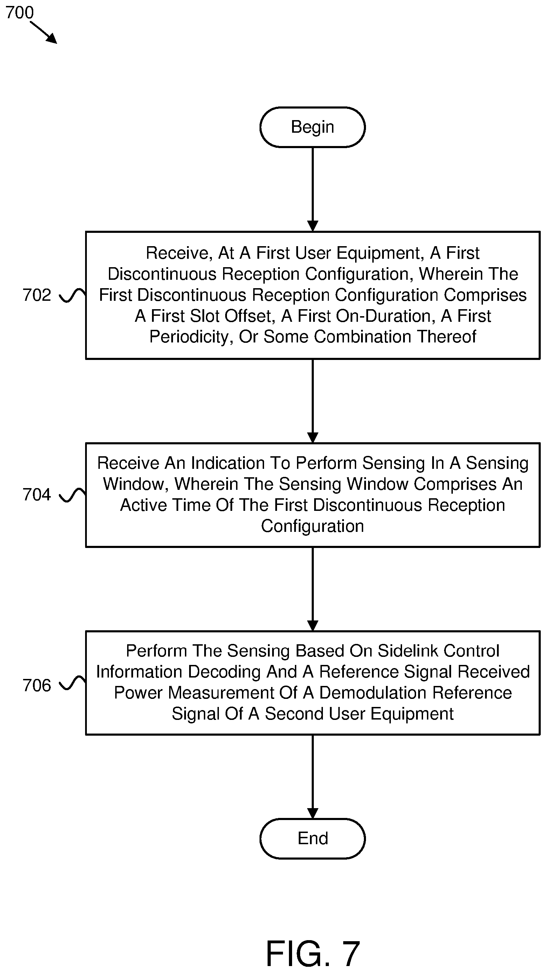

Figure 7 is a flow chart diagram illustrating one embodiment of a method 700 for sidelink control information based sensing. In some embodiments, the method 700 is performed by an apparatus, such as the remote unit 102. In certain embodiments, the method 700 may be performed by a processor executing program code, for example, a microcontroller, a microprocessor, a CPU, a GPU, an auxiliary processing unit, a FPGA, or the like.

In various embodiments, the method 700 includes receiving 702, at a first user equipment, a first discontinuous reception configuration. The first discontinuous reception configuration includes a first slot offset, a first on-duration, a first periodicity, or some combination thereof. In some embodiments, the method 700 includes receiving 704 an indication to perform sensing in a sensing window. The sensing window includes an active time of the first discontinuous reception configuration. In certain embodiments, the method 700 includes performing 706 the sensing based on sidelink control information decoding and a reference signal received power measurement of a demodulation reference signal of a second user equipment.

In certain embodiments, the method 700 further comprises receiving a first sensing configuration, wherein the first sensing configuration indicates when to perform sensing. In some embodiments, the method 700 further comprises receiving a second discontinuous reception configuration, wherein the second discontinuous reception configuration comprises a second slot offset, a second on-duration, a second periodicity, or some combination thereof, and the second discontinuous reception configuration applies to channel busy ratio or channel occupancy rate measurements. In various embodiments, the method 700 further comprises receiving a third discontinuous reception configuration, wherein the third discontinuous reception configuration comprises a third slot offset, a third on-duration, a third periodicity, or some combination thereof, and the third configuration applies to sidelink synchronization signal block reception.

In one embodiment, the method 700 further comprises receiving a second discontinuous reception configuration, wherein the second discontinuous reception configuration comprises a second slot offset, a second on-duration, a second periodicity, or some combination thereof, and the second discontinuous reception configuration applies to channel busy ratio or channel occupancy rate measurements. In certain embodiments, the method 700 further comprises determining an average sidelink reference signal received power based on the sensing performed during the first on-duration corresponding to the first discontinuous reception configuration. In some embodiments, the method 700 further comprises receiving a discontinuous reception configuration for each application of a plurality of applications operating in the first user equipment.

In various embodiments, the method 700 further comprises performing sensing for each discontinuous reception configuration configured at the first user equipment. In one embodiment, the method 700 further comprises determining an average sidelink reference signal received power based on the sensing performed during each on-duration of a corresponding discontinuous reception configuration. In certain embodiments, the method 700 further comprises estimating a channel busy ratio or a channel occupancy rate measurement for each discontinuous reception configuration configured at the first user equipment.

In some embodiments, the method 700 further comprises selecting candidate resources for a first discontinuous reception configuration based on sensing during each discontinuous reception configuration configured at the first user equipment. In various embodiments, the method 700 further comprises estimating a channel busy ratio or a channel occupancy rate measurement during the first on-duration corresponding to the first discontinuous reception configuration. In one embodiment, the method 700 further comprises selecting candidate resources for a first discontinuous reception configuration based on the sensing during the first on-duration corresponding to the first discontinuous reception configuration.

In certain embodiments, the method 700 further comprises decoding a layer one priority from sidelink control information received as a result of the sensing and setting an inactivity timer, a hybrid automatic repeat request retransmission timer, or a combination thereof during the sensing window based on the layer one priority. In some embodiments, the method 700 further comprises starting the inactivity timer, the hybrid automatic repeat request retransmission timer, or the combination thereof during the sensing window if the first user equipment decodes a destination identifier from a physical sidelink control channel and a physical sidelink shared channel and determines that the destination identifier is part of a configured destination identifier.

In various embodiments, the method 700 further comprises performing a congestion control mechanism of restricting transmission parameters in a resource pool for each configured discontinuous reception cycle. In one embodiment, the method 700 further comprises performing reconfiguration of the first slot offset, the first on-duration, the first periodicity, or some combination thereof based on a channel busy ratio or a channel occupancy rate measurement.

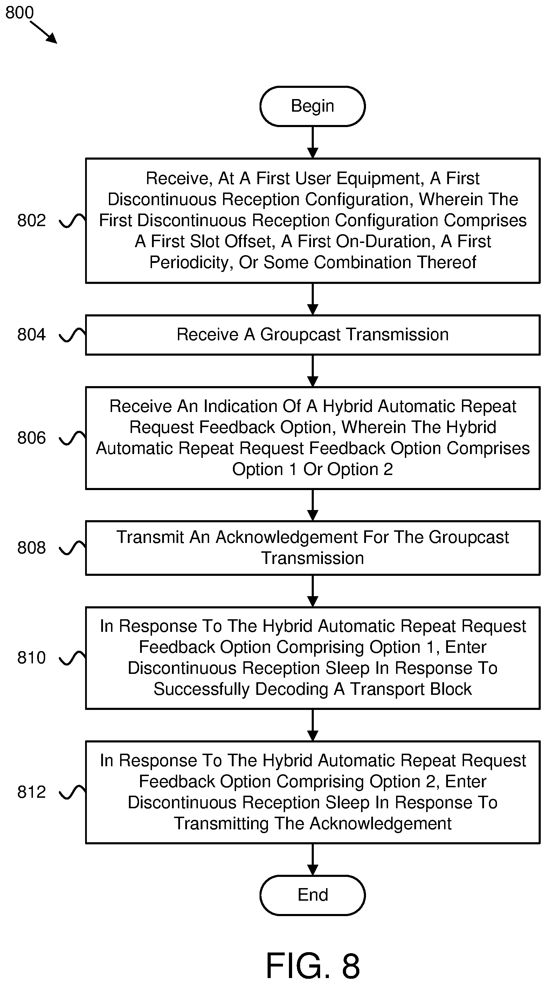

Figure 8 is a flow chart diagram illustrating one embodiment of a method 800 for discontinuous reception configuration. In some embodiments, the method 800 is performed by an apparatus, such as the remote unit 102. In certain embodiments, the method 800 may be performed by a processor executing program code, for example, a microcontroller, a microprocessor, a CPU, a GPU, an auxiliary processing unit, a FPGA, or the like.

In various embodiments, the method 800 includes receiving 802, at a first user equipment, a first discontinuous reception configuration. The first discontinuous reception configuration includes a first slot offset, a first on-duration, a first periodicity, or some combination thereof. In some embodiments, the method 800 includes receiving 804 a groupcast transmission. In certain embodiments, the method 800 includes receiving 806 an indication of a hybrid automatic repeat request feedback option. The hybrid automatic repeat request feedback option includes option 1 or option 2. In various embodiments, the method 800 includes transmitting 808 an acknowledgement for the groupcast transmission. In some embodiments, the method 800 includes, in response to the hybrid automatic repeat request feedback option including option 1, entering 810 discontinuous reception sleep in response to successfully decoding a transport block. In certain embodiments, the method 800 includes, in response to the hybrid automatic repeat request feedback option including option 2, entering 812 discontinuous reception sleep in response to transmitting the acknowledgement.

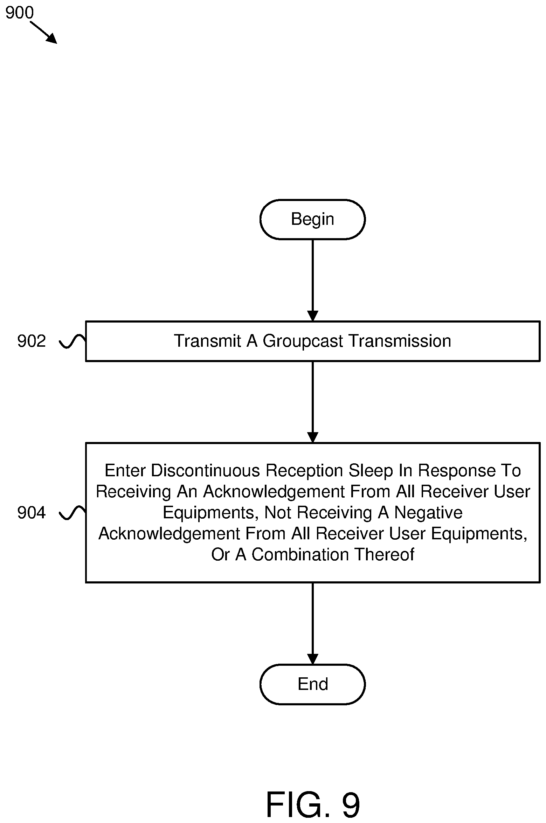

Figure 9 is a flow chart diagram illustrating one embodiment of a method 900 for entering discontinuous reception sleep. In some embodiments, the method 900 is performed by an apparatus, such as the remote unit 102. In certain embodiments, the method 900 may be performed by a processor executing program code, for example, a microcontroller, a microprocessor, a CPU, a GPU, an auxiliary processing unit, a FPGA, or the like.

In various embodiments, the method 900 includes transmitting 902 a groupcast transmission. In some embodiments, the method 900 includes entering 904 discontinuous reception sleep in response to receiving an acknowledgement from all receiver user equipments, not receiving a negative acknowledgement from all receiver user equipments, or a combination thereof.

In certain embodiments, in response to a hybrid automatic repeat request feedback option comprising option 2, the method 900 further comprises entering discontinuous reception sleep in response to receiving the acknowledgement from all receiver user equipments. In some embodiments, in response to a hybrid automatic repeat request feedback option comprising option 1, the method 900 further comprises entering discontinuous reception sleep in response to receiving the negative acknowledgement from all receiver user equipments.

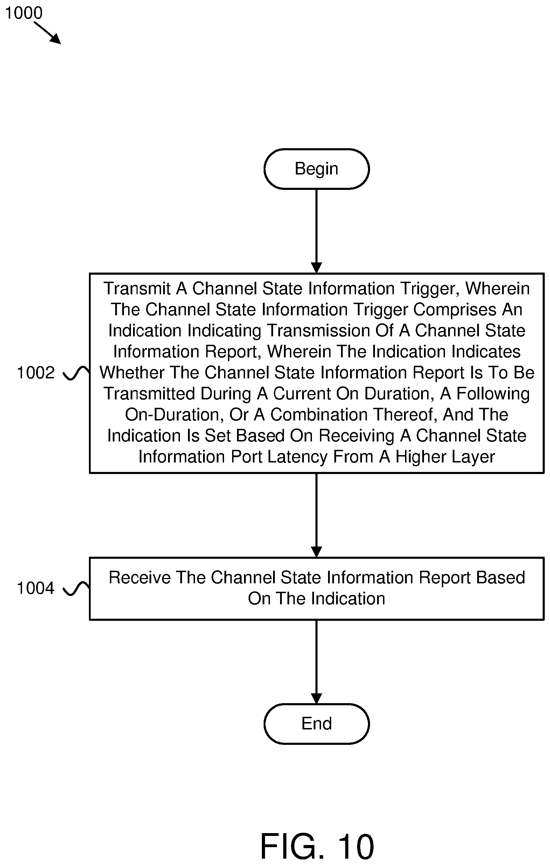

Figure 10 is a flow chart diagram illustrating one embodiment of a method 1000 for channel state information reporting. In some embodiments, the method 1000 is performed by an apparatus, such as the remote unit 102. In certain embodiments, the method 1000 may be performed by a processor executing program code, for example, a microcontroller, a microprocessor, a CPU, a GPU, an auxiliary processing unit, a FPGA, or the like.

In various embodiments, the method 1000 includes transmitting 1002 a channel state information trigger. The channel state information trigger includes an indication indicating transmission of a channel state information report. The indication indicates whether the channel state information report is to be transmitted during a current on-duration, a following on-duration, or a combination thereof, and the indication is set based on receiving a channel state information port latency from a higher layer. In some embodiments, the method 1000 includes receiving 1004 the channel state information report based on the indication.

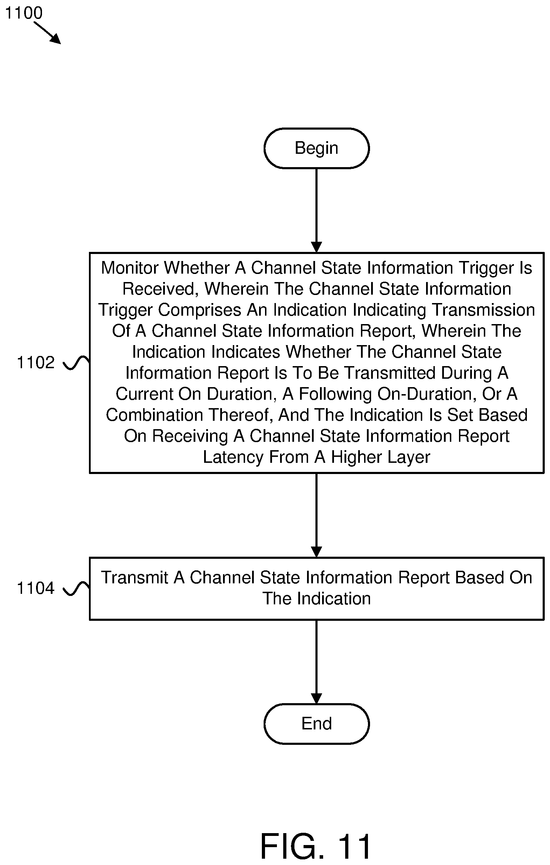

Figure 11 is a flow chart diagram illustrating another embodiment of a method 1100 for channel state information reporting. In some embodiments, the method 1100 is performed by an apparatus, such as the remote unit 102. In certain embodiments, the method 1100 may be performed by a processor executing program code, for example, a microcontroller, a microprocessor, a CPU, a GPU, an auxiliary processing unit, a FPGA, or the like.

In various embodiments, the method 1100 includes monitoring 1102 whether a channel state information trigger is received. The channel state information trigger includes an indication indicating transmission of a channel state information report. The indication indicates whether the channel state information report is to be transmitted during a current on-duration, a following on-duration, or a combination thereof, and the indication is set based on receiving a channel state information report latency from a higher layer. In some embodiments, the method 1100 includes transmitting 1104 a channel state information report based on the indication.

In certain embodiments, the method 1100 further comprises extending a current discontinuous reception cycle active period by starting an inactivity timer, restarting the inactivity timer, or a combination thereof based on the reception of a channel state information trigger at an end of the active period and the channel state information report latency received from the higher layer.

In one embodiment, a method comprises: receiving, at a first user equipment, a first discontinuous reception configuration, wherein the first discontinuous reception configuration comprises a first slot offset, a first on-duration, a first periodicity, or some combination thereof; receiving an indication to perform sensing in a sensing window, wherein the sensing window comprises an active time of the first discontinuous reception configuration; and performing the sensing based on sidelink control information decoding and a reference signal received power measurement of a demodulation reference signal of a second user equipment.

In certain embodiments, the method further comprises receiving a first sensing configuration, wherein the first sensing configuration indicates when to perform sensing.

In some embodiments, the method further comprises receiving a second discontinuous reception configuration, wherein the second discontinuous reception configuration comprises a second slot offset, a second on-duration, a second periodicity, or some combination thereof, and the second discontinuous reception configuration applies to channel busy ratio or channel occupancy rate measurements.

In various embodiments, the method further comprises receiving a third discontinuous reception configuration, wherein the third discontinuous reception configuration comprises a third slot offset, a third on-duration, a third periodicity, or some combination thereof, and the third configuration applies to sidelink synchronization signal block reception.

In one embodiment, the method further comprises receiving a second discontinuous reception configuration, wherein the second discontinuous reception configuration comprises a second slot offset, a second on-duration, a second periodicity, or some combination thereof, and the second discontinuous reception configuration applies to channel busy ratio or channel occupancy rate measurements.

In certain embodiments, the method further comprises determining an average sidelink reference signal received power based on the sensing performed during the first on-duration corresponding to the first discontinuous reception configuration.

In some embodiments, the method further comprises receiving a discontinuous reception configuration for each application of a plurality of applications operating in the first user equipment.

In various embodiments, the method further comprises performing sensing for each discontinuous reception configuration configured at the first user equipment.

In one embodiment, the method further comprises determining an average sidelink reference signal received power based on the sensing performed during each on-duration of a corresponding discontinuous reception configuration.

In certain embodiments, the method further comprises estimating a channel busy ratio or a channel occupancy rate measurement for each discontinuous reception configuration configured at the first user equipment.

In some embodiments, the method further comprises selecting candidate resources for a first discontinuous reception configuration based on sensing during each discontinuous reception configuration configured at the first user equipment.

In various embodiments, the method further comprises estimating a channel busy ratio or a channel occupancy rate measurement during the first on-duration corresponding to the first discontinuous reception configuration.

In one embodiment, the method further comprises selecting candidate resources for a first discontinuous reception configuration based on the sensing during the first on-duration corresponding to the first discontinuous reception configuration.

In certain embodiments, the method further comprises decoding a layer one priority from sidelink control information received as a result of the sensing and setting an inactivity timer, a hybrid automatic repeat request retransmission timer, or a combination thereof during the sensing window based on the layer one priority.

In some embodiments, the method further comprises starting the inactivity timer, the hybrid automatic repeat request retransmission timer, or the combination thereof during the sensing window if the first user equipment decodes a destination identifier from a physical sidelink control channel and a physical sidelink shared channel and determines that the destination identifier is part of a configured destination identifier.

In various embodiments, the method further comprises performing a congestion control mechanism of restricting transmission parameters in a resource pool for each configured discontinuous reception cycle.

In one embodiment, the method further comprises performing reconfiguration of the first slot offset, the first on-duration, the first periodicity, or some combination thereof based on a channel busy ratio or a channel occupancy rate measurement.

In one embodiment, an apparatus comprises a first user equipment. The apparatus further comprises: a receiver that: receives a first discontinuous reception configuration, wherein the first discontinuous reception configuration comprises a first slot offset, a first on-duration, a first periodicity, or some combination thereof; and receives an indication to perform sensing in a sensing window, wherein the sensing window comprises an active time of the first discontinuous reception configuration; and a processor that performs the sensing based on sidelink control information decoding and a reference signal received power measurement of a demodulation reference signal of a second user equipment.

In certain embodiments, the receiver receives a first sensing configuration, wherein the first sensing configuration indicates when to perform sensing.

In some embodiments, the receiver receives a second discontinuous reception configuration, and the second discontinuous reception configuration comprises a second slot offset, a second on-duration, a second periodicity, or some combination thereof, and the second discontinuous reception configuration applies to channel busy ratio or channel occupancy rate measurements.

In various embodiments, the receiver receives a third discontinuous reception configuration, and the third discontinuous reception configuration comprises a third slot offset, a third on-duration, a third periodicity, or some combination thereof, and the third configuration applies to sidelink synchronization signal block reception.

In one embodiment, the receiver receives a second discontinuous reception configuration, and the second discontinuous reception configuration comprises a second slot offset, a second on-duration, a second periodicity, or some combination thereof, and the second discontinuous reception configuration applies to channel busy ratio or channel occupancy rate measurements.

In certain embodiments, the processor determines an average sidelink reference signal received power based on the sensing performed during the first on-duration corresponding to the first discontinuous reception configuration.

In some embodiments, the receiver receives a discontinuous reception configuration for each application of a plurality of applications operating in the first user equipment.

In various embodiments, the processor performs sensing for each discontinuous reception configuration configured at the first user equipment.

In one embodiment, the processor determines an average sidelink reference signal received power based on the sensing performed during each on-duration of a corresponding discontinuous reception configuration.

In certain embodiments, the processor estimates a channel busy ratio or a channel occupancy rate measurement for each discontinuous reception configuration configured at the first user equipment.

In some embodiments, the processor selects candidate resources for a first discontinuous reception configuration based on sensing during each discontinuous reception configuration configured at the first user equipment.

In various embodiments, the processor estimates a channel busy ratio or a channel occupancy rate measurement during the first on-duration corresponding to the first discontinuous reception configuration.

In one embodiment, the processor selects candidate resources for a first discontinuous reception configuration based on the sensing during the first on-duration corresponding to the first discontinuous reception configuration.

In certain embodiments, the processor decodes a layer one priority from sidelink control information received as a result of the sensing and setting an inactivity timer, a hybrid automatic repeat request retransmission timer, or a combination thereof during the sensing window based on the layer one priority.

In some embodiments, the processor starts the inactivity timer, the hybrid automatic repeat request retransmission timer, or the combination thereof during the sensing window if the first user equipment decodes a destination identifier from a physical sidelink control channel and a physical sidelink shared channel and determines that the destination identifier is part of a configured destination identifier.

In various embodiments, the processor performs a congestion control mechanism of restricting transmission parameters in a resource pool for each configured discontinuous reception cycle.

In one embodiment, the processor performs reconfiguration of the first slot offset, the first on-duration, the first periodicity, or some combination thereof based on a channel busy ratio or a channel occupancy rate measurement.

In one embodiment, a method comprises: receiving, at a first user equipment, a first discontinuous reception configuration, wherein the first discontinuous reception configuration comprises a first slot offset, a first on-duration, a first periodicity, or some combination thereof; receiving a groupcast transmission; receiving an indication of a hybrid automatic repeat request feedback option, wherein the hybrid automatic repeat request feedback option comprises option 1 or option 2; transmitting an acknowledgement for the groupcast transmission; in response to the hybrid automatic repeat request feedback option comprising option 1, entering discontinuous reception sleep in response to successfully decoding a transport block; and, in response to the hybrid automatic repeat request feedback option comprising option 2, entering discontinuous reception sleep in response to transmitting the acknowledgement.

In one embodiment, an apparatus comprises a first user equipment. The apparatus further comprises: a receiver that: receives a first discontinuous reception configuration, wherein the first discontinuous reception configuration comprises a first slot offset, a first on-duration, a first periodicity, or some combination thereof; receives a groupcast transmission; and receives an indication of a hybrid automatic repeat request feedback option, wherein the hybrid automatic repeat request feedback option comprises option 1 or option 2; a transmitter that transmits an acknowledgement for the groupcast transmission; and a processor that: in response to the hybrid automatic repeat request feedback option comprising option 1, enters discontinuous reception sleep in response to successfully decoding a transport block; and, in response to the hybrid automatic repeat request feedback option comprising option 2, enters discontinuous reception sleep in response to transmitting the acknowledgement.

In one embodiment, a method comprises: transmitting a groupcast transmission; and entering discontinuous reception sleep in response to receiving an acknowledgement from all receiver user equipments, not receiving a negative acknowledgement from all receiver user equipments, or a combination thereof.

In certain embodiments, in response to a hybrid automatic repeat request feedback option comprising option 2, the method further comprises entering discontinuous reception sleep in response to receiving the acknowledgement from all receiver user equipments.

In some embodiments, in response to a hybrid automatic repeat request feedback option comprising option 1, the method further comprises entering discontinuous reception sleep in response to receiving the negative acknowledgement from all receiver user equipments.

In one embodiment, an apparatus comprises: a transmitter that transmits a groupcast transmission; and a processor that enters discontinuous reception sleep in response to receiving an acknowledgement from all receiver user equipments, not receiving a negative acknowledgement from all receiver user equipments, or a combination thereof.

In certain embodiments, in response to a hybrid automatic repeat request feedback option comprising option 2, the processor enters discontinuous reception sleep in response to receiving the acknowledgement from all receiver user equipments.

In some embodiments, in response to a hybrid automatic repeat request feedback option comprising option 1, the processor enters discontinuous reception sleep in response to receiving the negative acknowledgement from all receiver user equipments.

In one embodiment, a method comprises: transmitting a channel state information trigger, wherein the channel state information trigger comprises an indication indicating transmission of a channel state information report, wherein the indication indicates whether the channel state information report is to be transmitted during a current on-duration, a following on-duration, or a combination thereof, and the indication is set based on receiving a channel state information port latency from a higher layer; and receiving the channel state information report based on the indication.

In one embodiment, an apparatus comprises: a transmitter that transmits a channel state information trigger, wherein the channel state information trigger comprises an indication indicating transmission of a channel state information report, wherein the indication indicates whether the channel state information report is to be transmitted during a current on-duration, a following on-duration, or a combination thereof, and the indication is set based on receiving a channel state information port latency from a higher layer; and a receiver that receives the channel state information report based on the indication.

In one embodiment, a method comprises: monitoring whether a channel state information trigger is received, wherein the channel state information trigger comprises an indication indicating transmission of a channel state information report, wherein the indication indicates whether the channel state information report is to be transmitted during a current on-duration, a following on-duration, or a combination thereof, and the indication is set based on receiving a channel state information report latency from a higher layer; and transmitting a channel state information report based on the indication.

In certain embodiments, the method further comprises extending a current discontinuous reception cycle active period by starting an inactivity timer, restarting the inactivity timer, or a combination thereof based on the reception of a channel state information trigger at an end of the active period and the channel state information report latency received from the higher layer.

In one embodiment, an apparatus comprises: a processor that monitors whether a channel state information trigger is received, wherein the channel state information trigger comprises an indication indicating transmission of a channel state information report, wherein the indication indicates whether the channel state information report is to be transmitted during a current on-duration, a following on-duration, or a combination thereof, and the indication is set based on receiving a channel state information report latency from a higher layer; and a transmitter that transmits a channel state information report based on the indication.

In certain embodiments, the processor extends a current discontinuous reception cycle active period by starting an inactivity timer, restarting the inactivity timer, or a combination thereof based on the reception of a channel state information trigger at an end of the active period and the channel state information report latency received from the higher layer.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

Further aspects of the invention are provided by the subject matter of the following numbered clauses:
Clause 1. An apparatus comprising a first user equipment, the apparatus further comprising: a receiver that: receives a first discontinuous reception configuration, wherein the first discontinuous reception configuration comprises a first slot offset, a first on-duration, a first periodicity, or some combination thereof; and receives an indication to perform sensing in a sensing window, wherein the sensing window comprises an active time of the first discontinuous reception configuration; and a processor that performs the sensing based on sidelink control information decoding and a reference signal received power measurement of a demodulation reference signal of a second user equipment.
Clause 2. The apparatus of clause 1, wherein the receiver receives a first sensing configuration, wherein the first sensing configuration indicates when to perform sensing.
Clause 3. The apparatus of clause 1, wherein the receiver receives a second discontinuous reception configuration, and the second discontinuous reception configuration comprises a second slot offset, a second on-duration, a second periodicity, or some combination thereof, and the second discontinuous reception configuration applies to channel busy ratio or channel occupancy rate measurements.
Clause 4. The apparatus of clause 1, wherein the receiver receives a third discontinuous reception configuration, and the third discontinuous reception configuration comprises a third slot offset, a third on-duration, a third periodicity, or some combination thereof, and the third configuration applies to sidelink synchronization signal block reception.
Clause 5. The apparatus of clause 1, wherein the processor determines an average sidelink reference signal received power based on the sensing performed during the first on-duration corresponding to the first discontinuous reception configuration.
Clause 6. The apparatus of clause 1, wherein the receiver receives a discontinuous reception configuration for each application of a plurality of applications operating in the first user equipment.
Clause 7. The apparatus of clause 1, wherein the processor estimates a channel busy ratio or a channel occupancy rate measurement during the first on-duration corresponding to the first discontinuous reception configuration.
Clause 8. The apparatus of clause 1, wherein the processor selects candidate resources for a first discontinuous reception configuration based on the sensing during the first on-duration corresponding to the first discontinuous reception configuration.
Clause 9. The apparatus of clause 1, wherein the processor decodes a layer one priority from sidelink control information received as a result of the sensing and setting an inactivity timer, a hybrid automatic repeat request retransmission timer, or a combination thereof during the sensing window based on the layer one priority.
Clause 10. The apparatus of clause 1, wherein the processor performs a congestion control mechanism of restricting transmission parameters in a resource pool for each configured discontinuous reception cycle.
Clause 11. An apparatus comprising: a transmitter that transmits a groupcast transmission; and a processor that enters discontinuous reception sleep in response to receiving an acknowledgement from all receiver user equipments, not receiving a negative acknowledgement from all receiver user equipments, or a combination thereof.
Clause 12. The apparatus of clause 11, wherein, in response to a hybrid automatic repeat request feedback option comprising option 2, the processor enters discontinuous reception sleep in response to receiving the acknowledgement from all receiver user equipments.
Clause 13. The apparatus of clause 11, wherein, in response to a hybrid automatic repeat request feedback option comprising option 1, the processor enters discontinuous reception sleep in response to receiving the negative acknowledgement from all receiver user equipments.
Clause 14. An apparatus comprising: a processor that monitors whether a channel state information trigger is received, wherein the channel state information trigger comprises an indication indicating transmission of a channel state information report, wherein the indication indicates whether the channel state information report is to be transmitted during a current on-duration, a following on-duration, or a combination thereof, and the indication is set based on receiving a channel state information report latency from a higher layer; and a transmitter that transmits a channel state information report based on the indication.
Clause 15. The apparatus of clause 14, wherein the processor extends a current discontinuous reception cycle active period by starting an inactivity timer, restarting the inactivity timer, or a combination thereof based on the reception of a channel state information trigger at an end of the active period and the channel state information report latency received from the higher layer.

## Claims

1. An apparatus comprising:
a transmitter that transmits a groupcast transmission; and
a processor that enters discontinuous reception sleep in response to receiving an acknowledgement from all receiver user equipments, not receiving a negative acknowledgement from all receiver user equipments, or a combination thereof.

2. The apparatus of claim 1, wherein, in response to a hybrid automatic repeat request feedback option comprising option 2, the processor enters discontinuous reception sleep in response to receiving the acknowledgement from all receiver user equipments.

3. The apparatus of claim 1, wherein, in response to a hybrid automatic repeat request feedback option comprising option 1, the processor enters discontinuous reception sleep in response to receiving the negative acknowledgement from all receiver user equipments.

4. A processor for wireless communication, the processor arranged to:
transmit a groupcast transmission; and
enter discontinuous reception sleep in response to receiving an acknowledgement from all receiver user equipments, not receiving a negative acknowledgement from all receiver user equipments, or a combination thereof.

5. The processor of claim 4, wherein the processor is further arranged to, in response to a hybrid automatic repeat request feedback option comprising option 2, enter discontinuous reception sleep in response to receiving the acknowledgement from all receiver user equipments.

6. The processor of claim 4, wherein the processor is further arranged to, in response to a hybrid automatic repeat request feedback option comprising option 1, enter discontinuous reception sleep in response to receiving the negative acknowledgement from all receiver user equipments.

7. A method performed by a remote unit, the method comprising:
transmitting a groupcast transmission; and
entering discontinuous reception sleep in response to receiving an acknowledgement from all receiver user equipments, not receiving a negative acknowledgement from all receiver user equipments, or a combination thereof.

8. The method of claim 7, wherein the method further comprises, in response to a hybrid automatic repeat request feedback option comprising option 2, entering discontinuous reception sleep in response to receiving the acknowledgement from all receiver user equipments.

9. The method of claim 7, wherein, the method further comprises, in response to a hybrid automatic repeat request feedback option comprising option 1, entering discontinuous reception sleep in response to receiving the negative acknowledgement from all receiver user equipments.

10. An apparatus comprising:
a processor that monitors whether a channel state information trigger is received, wherein the channel state information trigger comprises an indication indicating transmission of a channel state information report, wherein the indication indicates whether the channel state information report is to be transmitted during a current on-duration, a following on-duration, or a combination thereof, and the indication is set based on receiving a channel state information report latency from a higher layer; and
a transmitter that transmits a channel state information report based on the indication.

11. The apparatus of claim 10, wherein the processor extends a current discontinuous reception cycle active period by starting an inactivity timer, restarting the inactivity timer, or a combination thereof based on the reception of a channel state information trigger at an end of the active period and the channel state information report latency received from the higher layer.

12. A processor for wireless communication, the processor being arranged to:
monitor whether a channel state information trigger is received, wherein the channel state information trigger comprises an indication indicating transmission of a channel state information report, wherein the indication indicates whether the channel state information report is to be transmitted during a current on-duration, a following on-duration, or a combination thereof, and the indication is set based on receiving a channel state information report latency from a higher layer; and
transmit a channel state information report based on the indication.

13. The processor of claim 12, wherein the processor is further arranged to extend a current discontinuous reception cycle active period by starting an inactivity timer, restarting the inactivity timer, or a combination thereof based on the reception of a channel state information trigger at an end of the active period and the channel state information report latency received from the higher layer.

14. A method performed by a remote unit, the method comprising:
monitoring whether a channel state information trigger is received, wherein the channel state information trigger comprises an indication indicating transmission of a channel state information report, wherein the indication indicates whether the channel state information report is to be transmitted during a current on-duration, a following on-duration, or a combination thereof, and the indication is set based on receiving a channel state information report latency from a higher layer; and
transmitting a channel state information report based on the indication.

15. The method of claim 14, wherein the method further comprises extending a current discontinuous reception cycle active period by starting an inactivity timer, restarting the inactivity timer, or a combination thereof based on the reception of a channel state information trigger at an end of the active period and the channel state information report latency received from the higher layer.
